# EUROPÄISCHE PATENTANMELDUNG

(11) **EP 1 698 496 A1**
(43) Veröffentlichungstag der Anmeldung: **06.09.2006**
(21) Anmeldenummer: 05004640.8
(22) Anmeldetag: 03.03.2005
(51) Int. Cl.: B60G 9/00, B60G 11/04, B60G 11/10

(54) **Achsaufhängung eines Nutzfahrzeugs**

(30) Priorität: 02.03.2005 DE 102004010621
(71) Anmelder: MAN Nutzfahrzeuge Aktiengesellschaft, 80995 München (DE)
(72) Erfinder: Kraus, Alfons, 83624 Otterfing (DE); Stummer, Josef, Dipl.-Ing., 84332 Hebertsfelden (DE); Übelacker, Andreas, Dipl.-Ing. (TU), 82282 Unterschweinbach (DE)

(57) **Zusammenfassung**

Die Erfindung betrifft eine Achsaufhängung eines Nutzfahrzeuges mit einer Federbügel-Einheit, welche eine quer zur Fahrtrichtung verlaufende Achse/Achskörper (4, 23, 34) an dessen in Fahrzeuglängsrichtung verlaufenden Aufhängungsarm (5, 25, 35) haltert. Es ist Aufgabe der Erfindung, für eine Achsaufhängung eines Nutzfahrzeugs eine für unterschiedliche Befestigungsfälle universell einsetzbare Federbügel-Einheit zu schaffen, die zusätzlich eine Erhöhung der Lebensdauer der an der Befestigung beteiligten Bauteile ermöglicht. Diese Aufgabe wird erfindungsgemäß dadurch gelöst, dass
- eine eine(n) Achse/Achskörper (4, 23, 34) und einen Aufhängungsarm (5, 25, 35) miteinander verbindende Federbügel-Einheit (8) vorgesehen ist,
- die einen flexiblen Seil-Abschnitt (9) aufweist,
- der entweder Achse/Achskörper (4, 23, 34) oder Aufhängungsarm (5, 25, 35) oder hieran gebildete oder befestigte Bauteile (6, 17, 18, 27, 29) zumindest bereichsweise formschlüssig umschließt,
- und dass am einen Ende des flexiblen Seil-Abschnittes (9) ein erster Gewindestift-Abschnitt (10) mit einer hiermit zusammenwirkenden Mutter (13) und am anderen Ende des flexiblen Seil-Abschnittes (9) entweder ein zweiter Gewindestift-Abschnitt (10) mit Mutter (13) oder eine Pressklemme (31) vorgesehen ist, wobei sich Mutter (13) und ggf. vorgesehene Pressklemme (31) entweder an Achse/Achskörper (4, 23, 34) oder Aufhängungsarm (5, 25, 35) oder hieran befestigter oder gebildeter Bauelemente (7,16,26) abstützen.

## Beschreibung

Die Erfindung betrifft eine Achsaufhängung eines Nutzfahrzeuges mit einer Federbügel-Einheit, welche eine quer zur Fahrtrichtung verlaufende Achse/Achskörper an dessen in Fahrzeuglängsrichtung verlaufenden Aufhängungsarm haltert, gemäß dem Oberbegriff des Anspruchs 1.

Vorder- und Hinterfedern von Nutzfahrzeugen werden üblicherweise zwischen einer Federspannplatte und einer Federunterlage mit Federbügeln auf eine Achsbrücke montiert. Die Federbügel sind im Regelfall wahlweise aus vergüteten Werkstoffen durch Warmumformen oder aus kaltgezogenen unvergüteten Werkstoffen durch Kaltumformen gefertigt. Diese Art der Befestigung kann im Bereich von Federspannplatte und Federbügel gegebenenfalls als kritisch eingestuft werden. Wegen Fertigungstoleranzen kann es in diesem Bereich bei Fahrzeugeinsatz zur Punktbelastung an Federbügel, Federspannplatte, Achsbrücke oder Feder kommen, was zu vorzeitigem Ausfall der Feder, beziehungsweise durch einen möglichen Bruch des Federbügels führen kann.

Aus der EP 0 810 109 B1 ist eine Befestigung einer Fahrzeugachse an einer Achsaufhängung eines Nutzfahrzeugs bekannt, bei der eine mit Fahrzeugrädern ausgestattete Fahrzeugachse mittels einer Achsaufhängung an einem Fahrzeugrahmen gelagert ist. Diese Achslagerung beziehungsweise Achsaufhängung umfasst eine Achsfederung mit einem stabförmigen Lenker, der einenendes an der Fahrzeugkarosserie beziehungsweise am Fahrzeugrahmen schwenkbar gelagert ist und andernendes über ein Luftfederaggregat an der Fahrzeugkarosserie abgestützt ist. An diesem Lenker ist die Fahrzeugachse befestigt. Zu diesem Zweck ist an der Oberseite der Fahrzeugachse ein erstes Plattenelement angeordnet. Ein zweites Plattenelement ist an der Unterseite der Fahrzeugachse angeordnet und auf die Oberseite des Lenkers aufgesetzt. An der Unterseite des Lenkers ist ein drittes Plattenelement angeordnet. Zwei U-förmige Federbügel wirken mit den Plattenelementen zusammen und dienen zur Befestigung der Fahrzeugachse am Lenker, wodurch die Fahrzeugachse mit der Achsfederung verbunden wird. Die Federbügel besitzen zwei parallele Schenkel, die über eine Basis miteinander verbunden sind. Zur Festlegung der Fahrzeugachse am Lenker stützt sich die Basis des jeweiligen Federbügels auf der von der Fahrzeugachse abgewandten Außenseite des ersten Plattenelements ab, wobei sich die Federschenkel seitlich entlang der Fahrzeugachse erstrecken. Die Federschenkel übergreifen somit das erste Plattenelement und durchdringen das zweite Plattenelement sowie das dritte Plattenelement in dafür vorgesehene Öffnungen. An der von dem Lenker abgewandten Außenseite des dritten Plattenelements werden die Federbügel mit Muttern verschraubt. Über die Federbügel kann dabei eine Vorspannung zwischen den Plattenelementen ausgebildet werden, die regelmäßig größer als die üblicherweise zu erwartenden, von der Achsfederung aufzunehmenden Achslasten ist. Über eine solche Verbindung zwischen der Achsfederung und der Fahrzeugachse werden die an den Fahrzeugrädern beziehungsweise an der Fahrzeugachse wirkenden Kräfte und Momente gefedert an den Fahrzeugrahmen übertragen.

Es ist Aufgabe der Erfindung, für eine Achsaufhängung eines Nutzfahrzeugs eine für unterschiedliche Befestigungsfälle universell einsetzbare Federbügel-Einheit zu schaffen, die zusätzlich eine Erhöhung der Lebensdauer der an der Befestigung beteiligten Bauteile ermöglicht.

Diese Aufgabe wird erfindungsgemäß durch die Merkmale des Anspruchs 1 gelöst.

Somit ist eine Achsaufhängung eines Nutzfahrzeuges mit einer speziell ausgestalteten Federbügel-Einheit gegeben, welche eine(n) quer zur Fahrtrichtung verlaufende(n) Achse/Achskörper an dessen in Fahrzeuglängsrichtung verlaufenden Aufhängungsarm haltert.

Die speziell vorgesehene, eine(n) Achse/Achskörper und einen Aufhängungsarm miteinander verbindende erfindungsgemäße Federbügel-Einheit weist einen flexiblen Seil-Abschnitt auf, der entweder Achse/Achskörper oder Aufhängungsarm oder hieran gebildete oder befestigte Bauteile zumindest bereichsweise formschlüssig umschließt. Des weiteren ist am einen Ende des flexiblen Seil-Abschnittes der Federbügel-Einheit ein erster Gewindestift-Abschnitt mit einer hiermit zusammenwirkenden Mutter und am anderen Ende des flexiblen Seil-Abschnittes entweder ein zweiter Gewindestift-Abschnitt mit Mutter oder eine Pressklemme vorgesehen. Dabei stützt sich Mutter und die gegebenenfalls vorgesehene Pressklemme entweder an Achse/Achskörper oder Aufhängungsarm oder hieran befestigter oder gebildeter Bauelemente ab.

Mit der erfindungsgemäßen Lösung ist somit eine Achsaufhängung für Nutzfahrzeuge gegeben, bei der sich eine speziell ausgebildete Federbügel-Einheit mit ihrem Seil-Abschnitt formschlüssig um die hieran angebundenen Bauteile legt. Dadurch ist eine optimale Krafteinleitung der Federbügel-Einheit über die hieran anliegenden Bauteile auf den Aufhängungsarm gewährleistet. Dadurch kann eine erhöhte Lebensdauer des Aufhängungsarmes und der Federbügel-Einheit erzielt werden.

Ein weiterer Vorteil ist die mittels der erfindungsgemäßen Federbügel-Einheit erzielte Unabhängigkeit von der Größe und Ausgestaltung des Aufhängungsarmes, da über die bedarfsweise unterschiedliche Auswahl an Seillängen des flexiblen Seitenabschnitts der Federbügel-Einheit jede Anlagekontur der vom Seilabschnitt zu umschließenden Bauteile und jeder hierfür erforderliche Längenbedarf des Seilabschnittes darstellbar ist. Die einmal getroffene Auswahl an Gewindestift-Abschnitten, beziehungsweise Pressklemmen kann vorteilhafterweise beibehalten werden.

Gemäß einer weiteren Ausgestaltung der Erfindung kann die/der Achse/Achskörper als Tragzapfen und der hiermit fest verbundene Aufhängungsarm als Blattfederorgan eines Doppelachsaggregates ausgebildet sein. Der Tragzapfen kann gelenkig über einen Tragbock mit einem Fahrzeugrahmen verbunden sein. Das aus gegebenenfalls mehreren Federblättern bestehende Blattfederorgan stützt an seinen beiden Federenden jeweils eine Fahrzeugachse ab.

Gemäß einer weiteren Ausgestaltung der Erfindung kann die/der Achse/Achskörper als eine einzelne Fahrzeugachse/Achskörper und der hiermit fest verbundene Aufhängungsarm zusätzlich als Aufhängungsarm/Lenker für einen Luftfederbalg ausgebildet sein.

Gemäß einer weiteren Ausgestaltung der Erfindung kann die/der Achse/Achskörper als eine einzelne Fahrzeugachse/Achskörper und der hiermit fest verbundene Aufhängungsarm als Blattfederorgan ausgebildet sein. Das Blattfederorgan kann aus gegebenenfalls mehreren Federblättern bestehen.

Gemäß einer weiteren Ausgestaltung der Erfindung kann der wenigstens eine Gewindestift-Abschnitt mittels eines Verbindungs-Elementes mit dem flexiblen Seil-Abschnitt der Federbügel-Einheit verbunden sein.

Gemäß einer weiteren Ausgestaltung der Erfindung kann das Verbindungs-Element entweder einteilig mit dem Gewindestift-Abschnitt gebildet oder lösbar mit diesem, beispielsweise mittels einer Verschraubung verbunden sein.

Gemäß einer weiteren Ausgestaltung die Erfindung kann das Verbindungs-Element mittels einer Klemmung oder dergleichen mit dem flexiblen Seil-Abschnitt der Federbügel-Einheit verbunden sein.

Gemäß einer weiteren Ausgestaltung der Erfindung kann als Verbindungs-Element entweder ein Gewindebolzen mit Flankenflächen, eine Vierkant-Keilwelle mit Flankenflächen eine Sechskant-Keilwelle, ein Vielzahn-Profil, ein Torx-Profil oder dergleichen mit vorgesehen sein. Dabei können die hierbei gegebenenfalls vorgesehenen Flankenflächen - zwecks Verdrehsicherung der Verbindungs-Elemente - mit bezüglich der Flankenflächen komplementär ausgebildeten Profilen korrespondieren, die entweder an Achse/Achskörper oder Aufhängungsarm oder der hieran befestigten oder gebildeten Bauelemente gebildet sind.

Gemäß einer weiteren Ausgestaltung der Erfindung kann die Federbügel-Einheit mit wenigstens einem Gewindestift-Abschnitt und gegebenenfalls einer Pressklemme durch jeweils eine Durchgangsbohrung eines Bauelementes oder des hiermit verbundenen oder gebildeten Achskörpers oder Aufhängungsarms hindurchragen. Dabei kann die Federbügel-Einheit endseitig der Durchgangsbohrung entweder mittels der auf dem Gewindestift-Abschnitt sitzenden Mutter oder mittels eines endseitig auf der Pressklemme vorgesehenen Klemmenkopfes fixiert sein.

Gemäß einer weiteren Ausgestaltung der Erfindung kann eine Außenkontur des Verbindungs-Elementes und der gegebenenfalls vorgesehenen Pressklemme zumindest mit einer im Bereich der Durchgangsbohrung von Achse/Achskörper oder Aufhängungsarm oder hieran befestigter oder gebildeter Bauelemente vorgesehenen Innenkontur verdrehsicher korrespondieren.

Gemäß einer weiteren Ausgestaltung der Erfindung kann der Seil-Abschnitt der Federbügel-Einheit die Federspannplatte, das Blattfederorgan, den Aufhängungsarm, den Lenker in einer Ebene quer zur Fahrtrichtung entweder oberseitig oder unterseitig umschlingen.

Gemäß einer weiteren Ausgestaltung der Erfindung kann der Seil-Abschnitt der Federbügel-Einheit eine an der Federspannplatte, oder dem Blattfederorgan, oder dem Aufhängungsarm, oder dem Lenker gebildete oder befestigte seitliche oder mittige Nase umschlingen.

Gemäß einer weiteren Ausgestaltung der Erfindung kann der Seil-Abschnitt der Federbügel-Einheit ein von der Federspannplatte, oder von dem Blattfederorgan, oder von dem Aufhängungsarm, oder von dem Lenker abragendes Bauteil in einer Ebene längs der Fahrtrichtung entweder oberseitig oder unterseitig umschlingen.

Gemäß einer weiteren Ausgestaltung der Erfindung kann der Seil-Abschnitt der Federbügel-Einheit - gegebenenfalls zwecks Versteifung der Verbindung von Federbügel-Einheit und Federunterlage, oder Federbügel-Einheit und Federspannplatte oder Federbügel-Einheit und Achsbrücke - in einer Umschlingungsrille geführt sein, die an der Federunterlage oder der Federspannplatte oder der Achsbrücke oder einem hieran befestigten Bauteil gebildet ist.

Gemäß einer weiteren Ausgestaltung der Erfindung kann die Federunterlage entweder ein Pendellagergehäuse oder dergleichen sein oder als separate Federunterlage auf einem Pendellagergehäuse oder dergleichen sitzen.

Gemäß einer weiteren Ausgestaltung der Erfindung kann die Federspannplatte Bohrungen für die Aufnahme des Gewindestift-Abschnittes und der gegebenenfalls vorgesehenen Pressklemme aufweisen.

Gemäß einer weiteren Ausgestaltung der Erfindung kann die Federspannplatte Innenprofile aufweisen, die für die Verdrehsicherung der hierin eingeschobenen Verbindungs-Elemente und der gegebenenfalls vorgesehenen Pressklemme vorgesehen sind.

Gemäß einer weiteren Ausgestaltung der Erfindung kann das wenigstens eine Verbindungs-Element und die gegebenenfalls vorgesehene Pressklemme mit ihren Flankenflächen am Blattfederorgan oder am Aufhängungsarm oder am Lenker oder hiermit verbundener oder hieran gebildeter Bauteile anliegen.

Gemäß einer weiteren Ausgestaltung der Erfindung können die entweder an Achse/Achskörper oder an Aufhängungsarm gebildeten oder befestigten Bauteile entweder als ein Tragzapfen, oder als eine mittige Umschlingungsnase, oder als wenigstens eine Umschlingungsrille, oder als eine seitliche Umschlingungsnase oder als eine Spannplatte ausgebildet sein.

Gemäß einer weiteren Ausgestaltung der Erfindung können die entweder an Achse/Achskörper oder Aufhängungsarm befestigten oder gebildeten Bauelemente als Federunterlage, als Pendellagergehäuse, als Federspannplatte oder als Unterlegplatte ausgebildet sein.

Gemäß einer weiteren Ausgestaltung der Erfindung kann das die Federbügel-Einheit aufweisende Nutzfahrzeug ein Lastkraftwagen oder ein Omnibus sein.

Die Erfindung ist anhand mehrerer, in der Zeichnung dargestellter Ausführungsbeispiele näher beschrieben.

Es zeigen:
- Fig. 1: in perspektivischer Darstellung eine an einem Fahrzeugrahmen eines Lastkraftwagens angeordnete Achsaufhängung eines Doppelachsaggregates,
- Fig. 2: in Seitenansicht eine Achsaufhängung eines Doppelachsaggregates gemäß Fig. 1 mit einer ein Blattfederorgan mit einem Tragzapfen verbindenden Federbügel-Einheit,
- Fig. 3: in vertikaler Schnittdarstellung eine ein Blattfederorgan mit einem Tragzapfen verbindenden Federbügel-Einheit gemäß Fig. 2,
- Fig. 4: in perspektivischer Darstellung eine Federbügel-Einheit gemäß Fig. 3 mit Verbindungs-Elementen,
- Fig. 5: in perspektivischer Darstellung eine zweite alternative Ausführungsform einer ein Blattfederorgan gemäß Fig. 2 mit einem Tragzapfen verbindende Federbügel-Einheit,
- Fig. 6: in perspektivischer Darstellung eine Federbügel-Einheit gemäß Fig. 5 mit gegenüber Fig. 4 alternativ ausgeführten Verbindungs-Elementen,
- Fig. 7: in perspektivischer Darstellung eine dritte alternative Ausführungsform einer ein Blattfederorgan gemäß Fig. 2 mit einem Tragzapfen verbindende Federbügel-Einheit,
- Fig. 8: in perspektivischer Darstellung eine Federbügel-Einheit gemäß Fig. 7 mit einem Verbindungs-Element und einer Pressklemme,
- Fig. 9: in perspektivischer Darstellung eine vierte alternative Ausführungsform einer ein Blattfederorgan gemäß Fig. 2 mit einem Tragzapfen verbindende Federbügel-Einheit,
- Fig. 10: in perspektivischer Darstellung eine Federbügel-Einheit gemäß Fig. 9 mit einem schlingenförmigen Seil-Abschnitt und zwei Verbindungs-Elementen,
- Fig. 11: in perspektivischer Darstellung eine fünfte alternative Ausführungsform einer ein Blattfederorgan gemäß Fig. 2 mit einem Tragzapfen verbindende Federbügel-Einheit,
- Fig. 12: in perspektivischer Darstellung eine sechste alternative Ausführungsform einer ein Blattfederorgan gemäß Fig. 2 mit einem Tragzapfen verbindende Federbügel-Einheit,
- Fig. 13: schematisch und in Seitenansicht eine siebte alternative Ausführungsform einer einen Aufhängungsarm mit einer Fahrzeugachse verbindenden Federbügel-Einheit und
- Fig. 14: schematisch und in Seitenansicht eine achte alternative Ausführungsform einer ein Blattfederorgan mit einer Fahrzeugachse verbindenden Federbügel-Einheit.

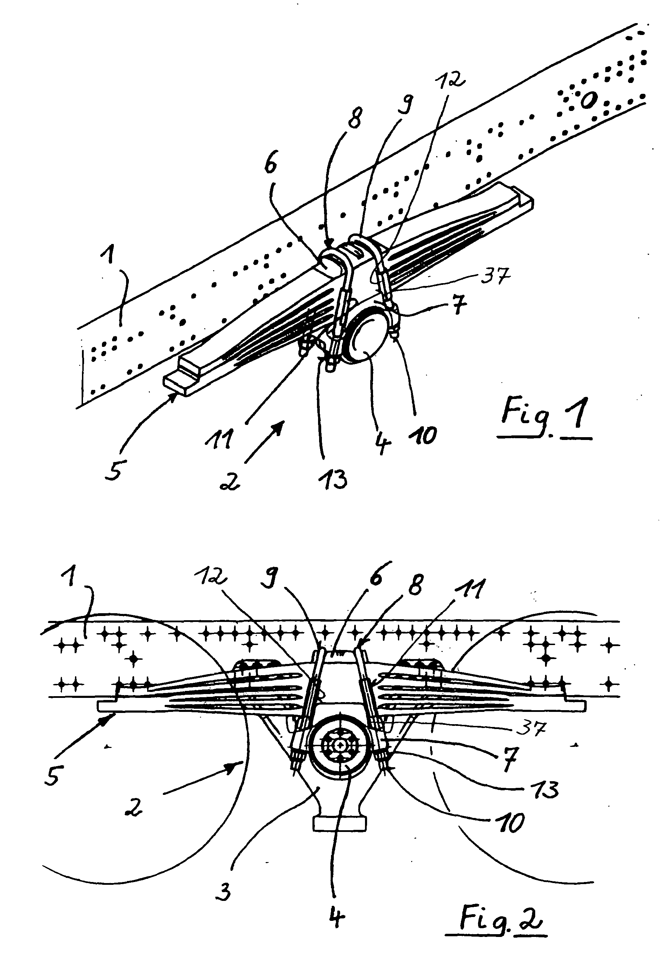

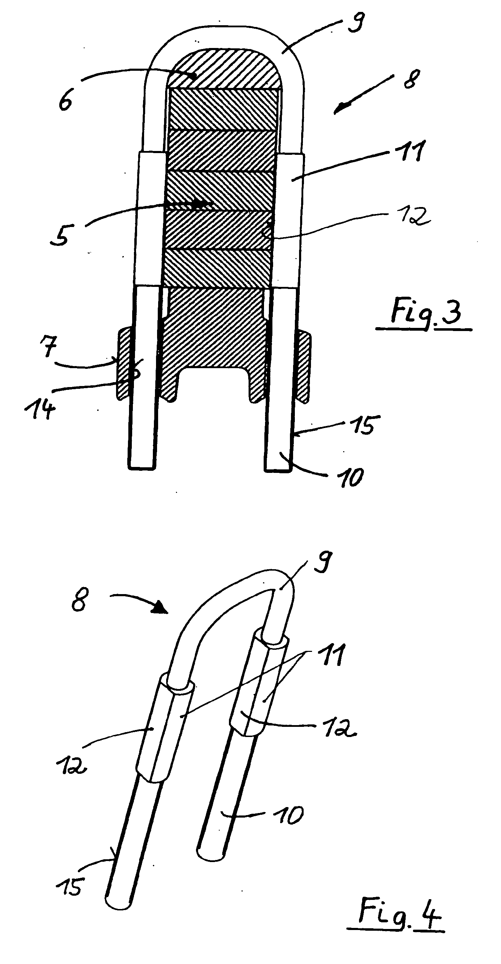

In Fig. 1 ist in perspektivischer Darstellung eine an einem Fahrzeugrahmen 1 eines Lastkraftwagens angeordnete Achsaufhängung 2 eines Doppelachsaggregates gezeigt. Das endseitig eines Blattfederorgans 5 jeweils Fahrzeugachsen abstützende Doppelachsaggregat ist hier nicht näher dargestellt. Das Blattfederorgan 5 ist mittels einer Federbügel-Einheit 8 an einem Tragzapfen 4 befestigt, welcher an einem am Fahrzeugrahmen 1 gehalterten Tragbock 3 (Fig. 2) gelenkig gelagert ist. Die das Blattfederorgan 5 am Tragzapfen 4 halternde Federbügel-Einheit 8 umschließt mit einem Seil-Abschnitt 9 eine auf dem Blattfederorgan 5 aufliegende Federspannplatte 6 und ragt mit jeweiligen Gewindestift-Abschnitten 10 durch in Fig. 3 gezeigte Bohrungen 14 einer dem Blattfederorgan 5 unterlegten Federunterlage 7 hindurch. Die Gewindestift-Abschnitte 10 der Federbügel-Einheit 8 sind mit einem Gewinde 15 (Fig. 3) versehen und tragen endseitig Muttern 13, welche die von der Federbügel-Einheit 8 umschlossene Bauteilanordnung von Federspannplatte 6, Blattfederorgan 5 und Federunterlage 7 verspannen. Des weiteren sind auf den Gewindestift-Abschnitten 10 der Federbügel-Einheit 8 als Verbindungs-Elemente 11, 21 Gewindebolzen 11 angeordnet, welche Anlageflächen 12 aufweisen, die mit an diesen anliegenden Anlageflächen 37 der Federunterlage 7 und - zwecks Querstabilisierung - gegebenenfalls mit hier nicht bezeichneten Flankenflächen des Blattfederorgans 5 korrespondieren.

Die Gewindebolzen 11 sind hier einstückig mit den Gewindestift-Abschnitten 10 gebildet und realisieren durch eine Verklemmung die feste Verbindung von Seil-Abschnitt 9 und Gewindestift-Abschnitt 10.

In Fig. 2 ist in Seitenansicht die Achsaufhängung 2 des Doppelachsaggregates gemäß Fig. 1 mit der das Blattfederorgan 5 mit dem Tragzapfen 4 verbindenden Federbügel-Einheit 8 gezeigt. Das zwischen Federspannplatte 6 und Federunterlage 7 aufgenommene Blattfederorgan 5 ist zwischen zwei, U-förmig ausgebildeten Federbügel-Einheiten 8 oberseitig umschlungen und unterseitig von Muttern 13 der Federbügel-Einheit 8 gegen die Federunterlage 7 verspannt. Die Federunterlage 7 weist hier Anlageflächen 37 auf, an denen die an den Gewindebolzen 11 gebildeten Flankenflächen 12 zur abstützenden Anlage gelangen.

In Fig. 3 ist in vertikaler Schnittdarstellung die das Blattfederorgan 5 mit einem Tragzapfen 4 verbindende Federbügel-Einheit 8 gemäß Fig. 2 gezeigt. Das Blattfederorgan 5 besteht in dieser Ausführungsversion aus mehreren hier nicht näher bezeichneten einzelnen Federblättern, welche oberseitig von der Federspannplatte 6 abgedeckt und unterseitig von der Federunterlage 7 unterlegt sind. Die hier etwa U-förmig ausgebildete Federbügel-Einheit 8 umschließt oberseitig mit ihrem Seil-Abschnitt 9 die Federspannplatte 6 und die oberen Blätter des Blattfederorgans 5. Mit ihren endseitig des Seil-Abschnittes 9 gebildeten Gewindestift-Abschnitten 10 umschließt die Federbügel-Einheit 8 die unteren Federblätter des Blattfederorgans 5 und durchdringt die innerhalb der Federunterlage 7 gebildeten Bohrungen 14. Endseitig der aus den Bohrungen 14 herausragenden Gewindestift-Abschnitte 10 sind die hier nicht gezeigten Muttern 13 auf dem Gewinde 15 der Gewindestift-Abschnitte 10 angeordnet. Des weiteren sind auf den Gewindestift-Abschnitten 10 die Verbindungs-Elemente 11, 21 angeordnet, die hier als Gewindebolzen 11 mit Flankenflächen 12 ausgebildet sind. Die Flankenflächen 12 der Gewindebolzen 11 kommen an den hier nicht näher bezeichneten Flankenflächen der Federblätter des Blattfederorgans 5 zur abstützenden Anlage. Des weiteren können die Flankenflächen 12 der Gewindebolzen 11 an den in Fig. 1 und 2 gezeigten Anlageflächen 37 der Federunterlage 7 zusätzlich zur Anlage kommen. Die Anlageflächen 37 können an der Federunterlage 7 gebildet oder an dieser befestigt sein.

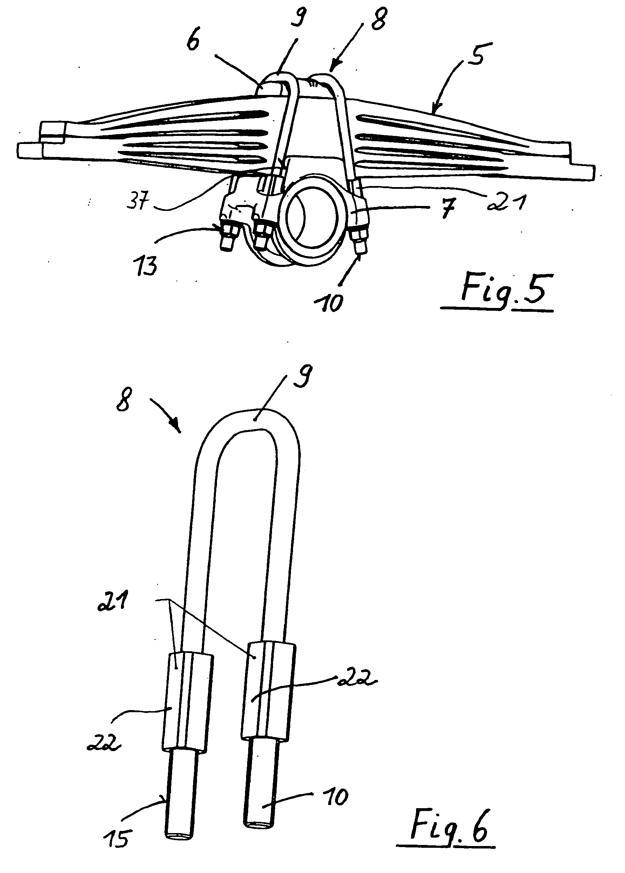

In Fig. 4 ist in perspektivischer Darstellung die Federbügel-Einheit 8 gemäß Fig. 3 gezeigt. Die Federbügel-Einheit 8 weist oberseitig den flexiblen Seil-Abschnitt 9 auf, an dessen beiden freien Enden jeweils ein Gewindestift-Abschnitt 10 mit Gewinde 15 angeordnet ist. Die beiden, den Seil-Abschnitt 9 fixierenden und mit dem Gewindestift-Abschnitten 10 gebildeten Gewindebolzen 11 weisen zur verdrehsicheren Abstützung an hierfür geeigneten Bauteilen Flankenflächen 12 auf.

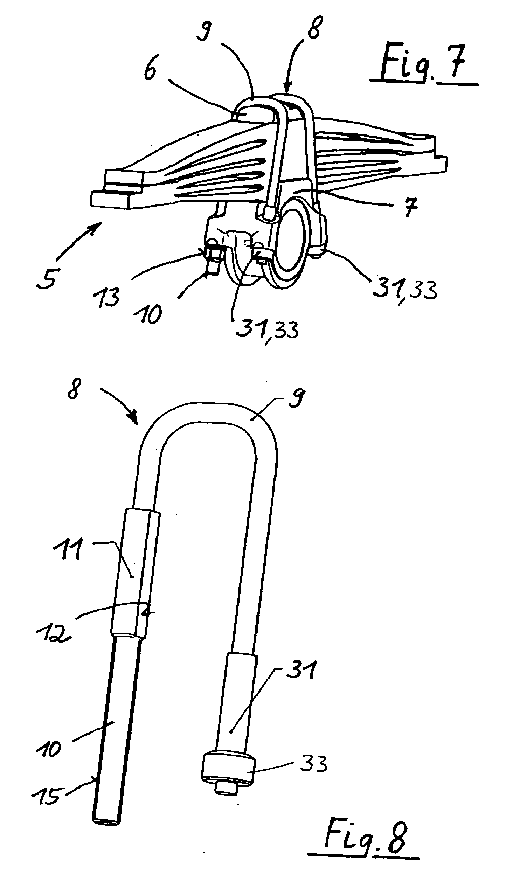

In Fig. 5 ist in perspektivischer Darstellung eine zweite alternative Ausführungsform einer ein Blattfederorgan 5 gemäß Fig. 2 mit einem Tragzapfen 4 verbindende Federbügel-Einheit 8 gezeigt. Die etwa U-förmig ausgebildete Federbügel-Einheit 8 umschlingt oberseitig die einzelnen Bauelemente, bestehend aus Federspannplatte 6, Blattfederorgan 5 und Federunterlage 7, gegen die sie mittels ihrer auf ihren Gewindestift-Abschnitten 10 sitzenden Muttern 13 verspannt ist. Die Federunterlage 7 ist hier beispielsweise als Pendellagergehäuse solcherart ausgebildet, dass sie den in Fig. 1 und Fig. 2 gezeigten Tragzapfen 4 lagerschalenartig umschließt. Die Federunterlage 7 kann ein oder mehrteilig ausgebildet sein. Des weiteren weist die Federunterlage 7 hier nicht näher bezeichnete, taschenartige Innenprofile auf, in denen die auf den Gewindestift-Abschnitten 10 verdrehbar angeordneten Verbindungs-Elemente 21 verdrehsicher aufgenommen sind. Die hier gezeigten Verbindungs-Elemente 21 sind in dieser Ausführungsform als Gewindebolzen mit Vierkantprofil ausgebildet, deren Flankenflächen 22 (Fig. 6) mit an der Federunterlage 7 gebildeten Anlageflächen 37 anlagemäßig korrespondieren.

In Fig. 6 ist in perspektivischer Darstellung eine Federbügel-Einheit 8 gemäß Fig. 5 mit gegenüber Fig. 4 alternativ ausgeführten Verbindungs-Elementen 21 gezeigt, die hier als Gewindebolzen mit Vierkantprofil ausgestaltet sind. Die mit den Gewindestift-Abschnitten 10 der Federbügel-Einheit 8 hier beispielsweise einteilig gebildeten Gewindebolzen 21 mit Vierkantprofil weisen zwecks ihrer Verdrehsicherung Flankenflächen 22 auf, die mit an der Federunterlage 7 gebildeten Anlageflächen 37 (Fig. 5) verdrehsicher zur Anlage kommen.

In Fig. 7 ist in perspektivischer Darstellung eine dritte alternative Ausführungsform einer ein Blattfederorgan 5 gemäß Fig. 2 mit einem Tragzapfen 4 verbindende Federbügel-Einheit 8 gezeigt. Die hier dargestellte Federbügel-Einheit 8 entspricht im Wesentlichen den vorgenannt diskutierten Federbügel-Einheiten 8, weist jedoch endseitig anstelle des einen Gewindestift-Abschnittes 10 eine endseitig des einen Seilabschnittes 9 angeordnete Pressklemme 31 auf. Die Pressklemme 31 ragt durch eine hier nicht näher bezeichnete Durchgangsbohrung der Federunterlage 7 hindurch und stützt sich stirnseitig an dieser mittels eines endseitig der Pressklemme 31 gebildeten Klemmenkopfes 33 ab. Bei dieser kostengünstigen Version einer Federbügel-Einheit 8 ist ein ansonsten vorzusehener einzelner Gewindestift-Abschnitt 10 einsparbar. Gemäß einer hier nicht näher bezeichneten Ausführungsversion kann die Außenkontur der Pressklemme 31 solcherart ausgestaltet sein, dass diese eine Anlagefläche bildet, welche mit einer an der Federunterlage 7 gebildeten Anlagefläche und gegebenenfalls den Flankenflächen der Federblätter des Blattfederorgans 5 anlagemäßig korrespondiert.

In Fig. 8 ist in perspektivischer Darstellung die Federbügel-Einheit 8 gemäß Fig. 7 einenendes des Seilabschnittes 9 mit einem einzelnen Gewindestift-Abschnitt 10 und anderenendes des Seilabschnittes 9 mit einer Pressklemme 33 versehen. Mit dem Gewindestift-Abschnitt 10 ist ein Gewindebolzen 11 mit Vierkantprofil und Flankenflächen 12 gebildet. Andernendes des Seilabschnittes 9 ist die Pressklemme 31 mit einem Klemmenkopf 33 versehen.

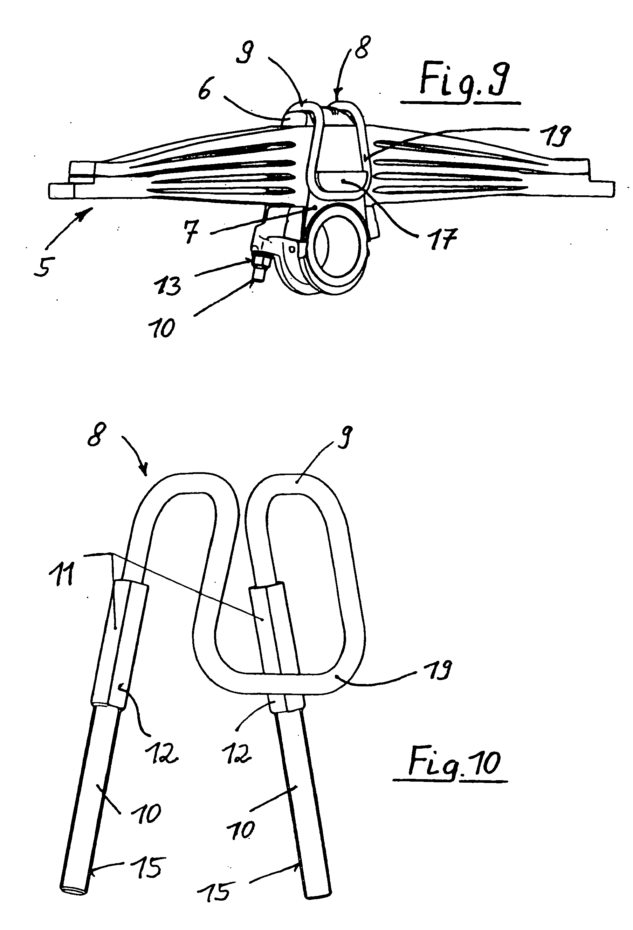

In Fig. 9 ist in perspektivischer Darstellung eine vierte alternative Ausführungsform einer ein Blattfederorgan 5 gemäß Fig. 2 mit einem Tragzapfen 4 verbindende Federbügel-Einheit 8 gezeigt. Die hier gezeigte Ausführung der Federbügel-Einheit 8 spart sowohl weitere Gewindestift-Abschnitte 10 als auch weitere Pressklemmen 31 ein und zeichnet sich durch einen verlängerten, schlingenförmigen Umschlingungsabschnitt 19 aus, welcher das Blattfederorgan 5 oberseitig umgreift. Dabei umschlingt der verlängerte Umschlingungsabschnitt 19 des Seilabschnittes 9 eine längs der Fahrtrichtung gebildete seitliche Umschlingungsnase 17 der Federunterlage 7 vollständig und ist mit beiden Seilenden des Seilabschnittes 9 über die auf dem Blattfederorgan oberseitig aufliegende Federspannplatte 6 auf die gegenügerliegende Seite des Blattfederorgans 5 geführt, wobei die endseitig der beiden Seilenden des Seilabschnittes 9 angeschlossenen Gewindestift-Abschnitte 10 mittels Muttern gegen die Federunterlage 7 verspannt sind.

In Fig. 10 ist in perspektivischer Darstellung die Federbügel-Einheit 8 gemäß Fig. 9 mit einem schlingenförmigen, flexiblem Seil-Abschnitt 9 und zwei endseitig des Seil-Abschnittes 9 gebildeten Gewindestift-Abschnitten 10 mit hierauf angeordneten Gewindebolzen 11 gezeigt. Der Seil-Abschnitt 9 dieser Ausführungsvariante der Federbügel-Einheit 8 ist durch einen verlängerten, schlingenförmigen Umschlingungsabschnitt 19 erweitert.

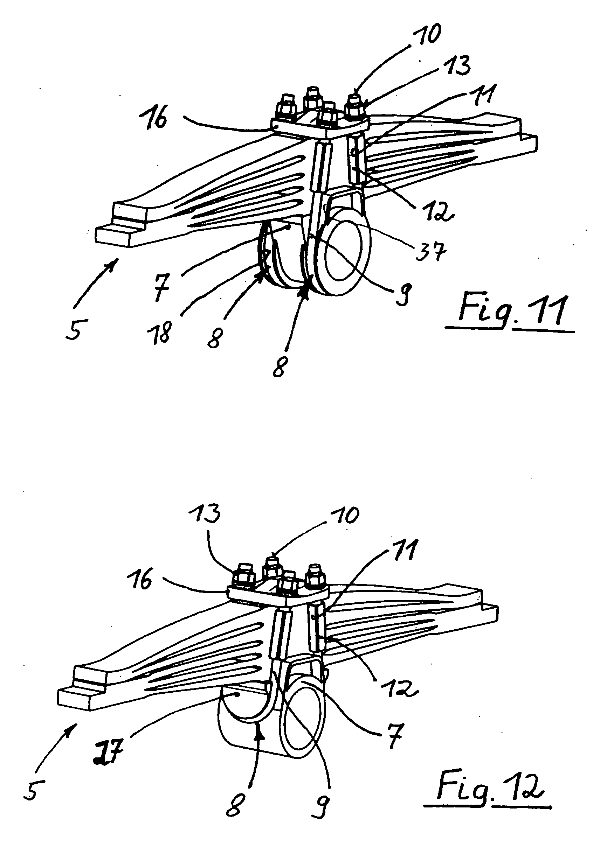

In Fig. 11 ist in perspektivischer Darstellung eine fünfte alternative Ausführungsform einer das Blattfederorgan 5 gemäß Fig. 2 mit einem Tragzapfen 4 verbindenden Federbügel-Einheit 8 gezeigt. Bei dieser Ausführungsversion der Federbügel-Einheit 8 umschlingt diese in einer Längsebene des Fahrzeugs die den Tragzapfen 4 umgebende, zu einer Lagerschale ausgebildete Federunterlage 7 (Pendellagergehäuse) in einer Umschlingungsrille 18, in welcher der Seilabschnitt 9 unterseitig der miteinander zu verbindenden Bauteile geführt ist. Endseitig des Seilabschnittes 9 sind die Gewindestift-Abschnitte 10 angeschlossen, welche hier nicht näher bezeichnete Durchgangsbohrungen einer auf dem Blattfederorgan 5 aufliegenden Federspannplatte 16 durchdringen und mit Muttern 13 gegen die Federspannplatte 16 verspannen. Die Gewindestift-Abschnitte 10 tragen zusätzlich die Gewindebolzen 11, welche die Flankenflächen 12 aufweisen. Die Flankenflächen 12 können mit den Flankenflächen des Blattfederorgans 5 zur abstützenden Anlage gelangen. In der hier gezeigten Version ist je Flankenseite des Blattfederorgans 5 eine einzelne Federbügel-Einheit 8 in einer Fahrzeuglängsebene in einer Umschlingungsrille 18 geführt. Gemäß einer hier nicht gezeigten Ausführungsvariante kann die die Durchgangsbohrungen aufweisende Federspannplatte 16 zusätzlich Innenprofile aufweisen, die mit den Außenprofilen der Gewindebolzen 11 zwecks Verdrehsicherung derselben zur abstützenden Anlage gelangen.

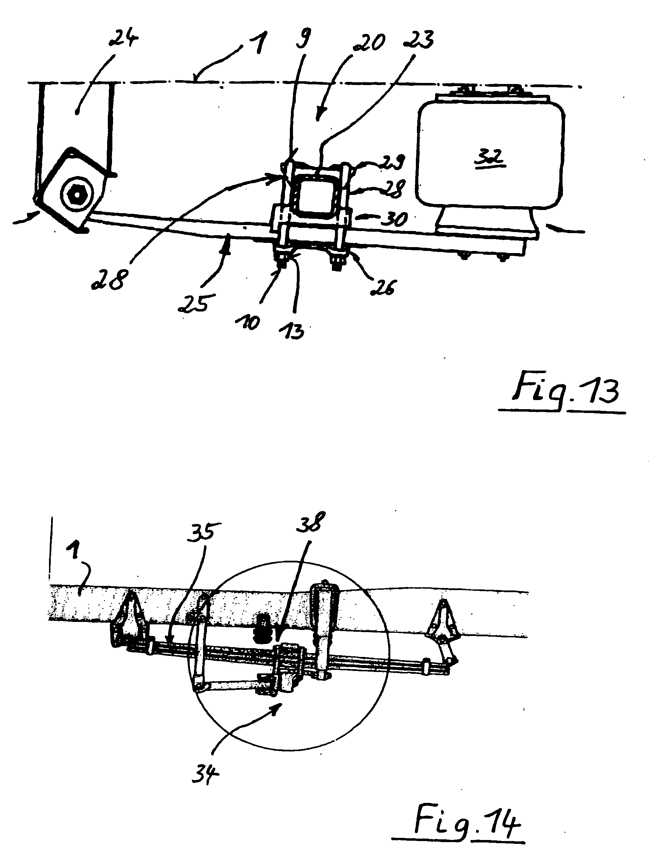

In Fig. 12 ist in perspektivischer Darstellung eine sechste alternative Ausführungsform der ein Blattfederorgan 5 gemäß Fig. 2 mit einem Tragzapfen 4 verbindenden Federbügel-Einheit 8 gezeigt. Die hier gezeigte Ausführungsvariante entspricht im Wesentlichen der in Fig. 11 gezeigten, und unterscheidet sich von dieser dadurch, dass die Federbügel-Einheit 8 das Blattfederorgan 5 und die hiermit verbundenen Bauteile in einer Ebene quer zur Fahrzeuglängsrichtung unterseitig umschlingen. Der Seil-Abschnitt 9 dieser Federbügel-Einheit 8 umschlingt eine in Fahrtrichtung weisende mittige Umschlingungsnase 27, die an der Federunterlage 7 gebildet ist. Die sich an den Seilabschnitt 9 anschließenden Gewindestift-Abschnitte 10 sind durch Durchgangsbohrungen einer oberseitig des Blattfederorgans 5 angeordneten Federspannplatte 16 hindurchgeführt und gegenüber dieser mittels Muttern 13 verspannt. Die mit den Gewindestift-Abschnitten 10 gebildeten Gewindebolzen 11 können mit ihren Flankenflächen 12 an den hier nicht näher bezeichneten Flankenflächen des Blattfederorgans 5 zur Anlage kommen.

In Fig. 13 ist schematisch und in Seitenansicht eine siebte alternative Ausführungsform der einen Aufhängungsarm 25 mit einer Fahrzeugachse (Achskörper) 23 verbindenden Federbügel-Einheit 28 gezeigt. Die hier luftgefedert ausgeführte Fahrzeugachse 23 ist mittels der Federbügel-Einheit 28 an dem Aufhängungsarm 25 befestigt. Dieser Aufhängungsarm 25 ist vorderseitig gelenkig über einen rahmenfesten Federbock 24 und hinterseitig über einen Luftfederbalg 32 an einem Fahrzeugrahmen 1 befestigt. Die hier gezeigte Federbügel-Einheit 28 umschließt mit ihrem Seilabschnitt 9 eine oberseitig der Fahrzeugachse 23 angeordnete Spannplatte 29 sowie eine unterhalb der Fahrzeugachse 23 angeordnete Unterlage 30. Die sich an dem Seilabschnitt 9 anschließenden Gewindestift-Abschnitte 10 durchdringen hier nicht näher bezeichnete Bohrungen der Unterlage 30 sowie einer dem Aufhängungsarm 25 unterlegten Unterlegplatte 26. Der Aufhängungsarm 25 ist somit zwischen Unterlegplatte 26 und Unterlage 30 aufgenommen und mittels der endseitig der Gewindestift-Abschnitte 10 angeordneten Muttern 13 und der Federbügel-Einheit 28 verspannt. Die hier nur schematisch dargestellte Federbügel-Einheit 28 kann sämtliche der vorgenannt beschriebenen Ausführungsvarianten aufweisen.

In Fig. 14 ist schematisch und in Seitenansicht eine achte alternative Ausführungsform der ein Blattfederorgan 35 mit einer Fahrzeugachse 34 verbindenden Federbügel-Einheit 38 gezeigt. Die hier nur schematisch dargestellte Federbügel-Einheit 38 kann sämtliche der vorgenannt beschriebenen Ausführungsvarianten aufweisen.

## Patentansprüche

1. Achsaufhängung eines Nutzfahrzeuges mit einer Federbügel-Einheit, welche eine quer zur Fahrtrichtung verlaufende Achse/Achskörper (4, 23, 34) an dessen in Fahrzeuglängsrichtung verlaufenden Aufhängungsarm (5, 25, 35) haltert, **dadurch gekennzeichnet, dass**
- eine eine(n) Achse/Achskörper (4, 23, 34) und einen Aufhängungsarm (5, 25, 35) miteinander verbindende Federbügel-Einheit (8, 28, 38) vorgesehen ist,
- die einen flexiblen Seil-Abschnitt (9) aufweist,
- der entweder Achse/Achskörper (4, 23, 34) oder Aufhängungsarm (5, 25, 35) oder hieran gebildete oder befestigte Bauteile (6, 17, 18, 27, 29) zumindest bereichsweise formschlüssig umschließt,
- und dass am einen Ende des flexiblen Seil-Abschnittes (9) ein erster Gewindestift-Abschnitt (10) mit einer hiermit zusammenwirkenden Mutter (13) und am anderen Ende des flexiblen Seil-Abschnittes (9) entweder ein zweiter Gewindestift-Abschnitt (10) mit Mutter (13) oder eine Pressklemme (31) vorgesehen ist, wobei sich Mutter (13) und gegebenenfalls vorgesehene Pressklemme (31) entweder an Achse/Achskörper (4, 23, 34) oder Aufhängungsarm (5, 25, 35) oder hieran befestigter oder gebildeter Bauelemente (7,16,26) abstützen.

2. Achsaufhängung nach Anspruch 1, **dadurch gekennzeichnet, dass** die/der Achse/Achskörper (4, 23, 34) als Tragzapfen (4) und der hiermit fest verbundene Aufhängungsarm (5, 25, 35) als Blattfederorgan (5) eines Doppelachsaggregates ausgebildet ist.

3. Achsaufhängung nach Anspruch 1, **dadurch gekennzeichnet, dass** die/der Achse/Achskörper (4, 23, 34) als einzelne Fahrzeugachse/Achskörper (23) und der hiermit fest verbundene Aufhängungsarm (5, 25, 35) zusätzlich als Aufhängungsarm/Lenker (25) für einen Luftfederbalg (32)ausgebildet ist.

4. Achsaufhängung nach Anspruch 1, **dadurch gekennzeichnet, dass** die/der Achse/Achskörper (4, 23, 34) als einzelne Fahrzeugachse/Achskörper (34) und der hiermit fest verbundene Aufhängungsarm (5, 25, 35) als Blattfederorgan (35) ausgebildet ist.

5. Achsaufhängung nach einem oder mehreren der vorangegangenen Ansprüche 1 bis 4, **dadurch gekennzeichnet, dass** der wenigstens eine Gewindestift-Abschnitt (10) mittels eines Verbindungs-Elementes (11, 21) mit dem flexiblen Seil-Abschnitt (9) der Federbügel-Einheit (8, 28, 38) verbunden ist.

6. Achsaufhängung nach Anspruch 5, **dadurch gekennzeichnet, dass** das Verbindungs-Element (11, 21) entweder einteilig mit dem Gewindestift-Abschnitt (10) gebildet oder lösbar mit diesem, beispielsweise mittels einer Verschraubung verbunden ist, und dass das Verbindungs-Element (11, 21) mittels einer Klemmung oder dergleichen mit dem flexiblen Seil-Abschnit (9) verbunden ist.

7. Achsaufhängung nach einem oder mehreren der vorangegangenen Ansprüche 1 bis 6, **dadurch gekennzeichnet, dass** als Verbindungs-Element (11, 21) entweder ein Gewindebolzen (11) mit Flankenflächen (12), eine Vierkant-Keilwelle (21) mit Flankenflächen (22), eine Sechskant-Keilwelle, ein Vielzahn-Profil, ein Torx-Profil oder dgl. vorgesehen ist, wobei die Flankenflächen (12, 22) zwecks ihrer Verdrehsicherung mit hierzu komplementär ausgebildeten Profilen korrespondieren, die entweder an Achse/Achskörper (4, 23, 34) oder Aufhängungsarm (5, 25, 35) oder der hieran befestigten oder gebildeten Bauelemente (7, 16, 26) gebildet sind.

8. Achsaufhängung nach einem oder mehreren der vorangegangenen Ansprüche 1 bis 7, **dadurch gekennzeichnet, dass** die Federbügel-Einheit (8, 28, 38) mit wenigstens einem Gewindestift-Abschnitt (10) und gegebenenfalls einer Pressklemme (31) durch jeweils eine Durchgangsbohrung (14) eines Bauelementes (7,16,26) oder des hiermit verbundenen oder gebildeten Achskörpers (4, 23, 34) oder Aufhängungsarms (5, 25, 35) hindurchragt, wobei die Federbügel-Einheit (8, 28, 38) endseitig der Durchgangsbohrung (14) entweder mittels der auf dem Gewindestift-Abschnitt (10) sitzenden Mutter (13) oder mittels eines endseitig auf der Pressklemme (31) vorgesehenen Klemmenkopfes (33) fixiert ist.

9. Achsaufhängung nach einem oder mehreren der vorangegangenen Ansprüche 1 bis 8, **dadurch gekennzeichnet, dass** eine Außenkontur des Gewinde-Elementes (11,21) und der gegebenenfalls vorgesehenen Pressklemme (31) zumindest mit einer im Bereich der Durchgangsbohrung (14) von Achse/Achskörper (4, 23, 34) oder Aufhängungsarm (5, 25, 35) oder hieran befestigter oder gebildeter Bauelemente (7,16,26) vorgesehenen Innenkontur verdrehsicher korrespondiert.

10. Achsaufhängung nach einem oder mehreren der vorangegangenen Ansprüche 1 bis 9, **dadurch gekennzeichnet, dass** der Seil-Abschnitt (9) der Federbügel-Einheit (8, 28, 38) die Federspannplatte (6), oder das Blattfederorgan (5, 35), oder dem Aufhängungsarm/Lenker (25) in einer Ebene quer zur Fahrtrichtung entweder oberseitig oder unterseitig umschlingt.

11. Achsaufhängung nach einem oder mehreren der vorangegangenen Ansprüche 1 bis 10, **dadurch gekennzeichnet, dass** der Seil-Abschnitt (9) der Federbügel-Einheit (8, 28, 38) eine an der Federspannplatte (6), oder dem Blattfederorgan (5, 35), oder dem Aufhängungsarm/Lenker (25) gebildete oder befestigte seitliche oder mittige Nase (17,27) umschlingt.

12. Achsaufhängung nach einem oder mehreren der vorangegangenen Ansprüche 1 bis 9, **dadurch gekennzeichnet, dass** der Seil-Abschnitt (9) der Federbügel-Einheit (8, 28, 38) ein von der Federspannplatte (6), oder von dem Blattfederorgan (5, 35), oder von dem Aufhängungsarm/Lenker (25) abragendes Bauteil in einer Ebene längs der Fahrtrichtung entweder oberseitig oder unterseitig umschlingt.

13. Achsaufhängung nach Anspruch 12, **dadurch gekennzeichnet, dass** der Seil-Abschnitt (9) der Federbügel-Einheit (8, 28, 38) - gegebenenfalls zwecks Versteifung - in einer Umschlingungsrille (18) geführt ist, die an der Federunterlage (7), oder an der Federspannplatte (6), oder an der Achsbrücke (23), oder einem hieran befestigten Bauteil (16) gebildet ist.

14. Achsaufhängung nach einem oder mehreren der vorangegangenen Ansprüche 1 bis 13, **dadurch gekennzeichnet, dass** die Federunterlage (7) entweder ein Pendellagergehäuse ist oder als separate Federunterlage auf einem Pendellagergehäuse aufsitzt.

15. Achsaufhängung nach Anspruch 13, **dadurch gekennzeichnet, dass** die Federspannplatte (6) Bohrungen für die Aufnahme des Gewindestift-Abschnittes (11) und gegebenenfalls der Pressklemme (31) aufweist.

16. Achsaufhängung nach Anspruch 15, **dadurch gekennzeichnet, dass** die Federspannplatte (6) Innenprofile aufweist, die für die Verdrehsicherung der hierin eingeschobenen Verbindungs-Elemente (11,21) und der gegebenenfalls vorgesehenen Pressklemme (31) vorgesehen sind.

17. Achsaufhängung nach einem oder mehreren der vorangegangenen Ansprüche 1 bis 16, **dadurch gekennzeichnet, dass** die Verbindungs-Elemente (11,21) und die gegebenenfalls vorgesehene Pressklemme (31) mit ihren Flankenflächen (12,22) an den Blattfederorgan (5, 35) oder dem Aufhängungsarm/Lenker (25) anliegen.

18. Achsaufhängung nach einem oder mehreren der vorangegangenen Ansprüche 1 bis 17, **dadurch gekennzeichnet, dass** die entweder an Achse/Achskörper (4, 23, 34) oder an Aufhängungsarm (5, 25, 35) gebildeten oder befestigten Bauteile (6, 17, 18, 27, 29) entweder als ein Tragzapfen (4), oder als eine mittige Umschlingungsnase (17), oder als wenigstens eine Umschlingungsrille (18), oder als eine seitliche Umschlingungsnase (27) oder als eine Spannplatte (29) ausgebildet sind.

19. Achsaufhängung nach einem oder mehreren der vorangegangenen Ansprüche 1 bis 18, **dadurch gekennzeichnet, dass** die entweder an Achse/Achskörper (4, 23, 34) oder Aufhängungsarm (5, 25, 35) befestigten oder gebildeten Bauelemente (7,16,26) als Federunterlage (7), oder als Pendellagergehäuse, oder als Federspannplatte (16), oder als Unterlegplatte (26) ausgebildet sind.

20. Achsaufhängung nach einem oder mehreren der vorangegangenen Ansprüche 1 bis 19, **dadurch gekennzeichnet, dass** das die Federbügel-Einheit (8, 28, 38) aufweisende Nutzfahrzeug ein Lastkraftwagen oder ein Omnibus ist.
